(19) Europäisches Patentamt
European Patent Office
Office européen des brevets

(11) Veröffentlichungsnummer: **0 133 283**
**B1**

# (12) EUROPÄISCHE PATENTSCHRIFT

(45) Veröffentlichungstag der Patentschrift:
**01.04.87**

(51) Int. Cl.⁴: **C 09 B 62/513**, D 06 P 3/66, D 06 P 3/10

(21) Anmeldenummer: **84108767.9**

(22) Anmeldetag: **25.07.84**

(54) **Wasserlösliche Disazoverbindungen, Verfahren zu deren Herstellung und ihre Verwendung als Farbstoffe.**

(30) Priorität: **29.07.83 DE 3327713**

(43) Veröffentlichungstag der Anmeldung:
**20.02.85 Patentblatt 85/8**

(45) Bekanntmachung des Hinweises auf die Patenterteilung:
**01.04.87 Patentblatt 87/14**

(84) Benannte Vertragsstaaten:
**BE CH DE FR GB IT LI**

(56) Entgegenhaltungen:
**EP - A - 0 068 204**
**JP - A - 43 015 299**

(73) Patentinhaber: **HOECHST AKTIENGESELLSCHAFT,**
***Postfach 80 03 20, D-6230 Frankfurt am Main 80 (DE)***

(72) Erfinder: **Schläfer, Ludwig, Dr., Königsberger Strasse 40,**
***D-6233 Kelkheim (Taunus) (DE)***
Erfinder: **Springer, Hartmut, Dr., Am Erdbeerstein 27,**
**D-6240 Königstein/Taunus (DE)**

**EP 0 133 283 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Farbstoffe.

Aus dem Beispiel 50 der deutscnen Patentschrift 965 902, desweiteren aus den europäischen Patentanmeldungs-Veröffentlichungen Nrs. 0 043 560 A1, 0 063 276 A2 und 0 071 035 A1 sowie aus der britischen Patentschrift Nr. 1 183 661, der japanischen Patentbekanntmachung Sho-43-15299 und der japanischen Patentanmeldungs-Veröffentlichung Sho-58-002354 sind bereits Disazoverbindungen bekannt, deren bivalente Kupplungskomponente die 1-Amino-8-naphthol-3,6-disulfonsäure ist. Diese bekannten Disazoverbindungen liefern jedoch Färbungen, deren Nasslichtechtheit nicht befriedigend sind.

Mit der vorliegenden Patentanmeldung wurden nunmehr neue, technisch wertvolle Disazoverbindungen mit insbesondere verbesserten Nasslichtechtheiten gefunden, die der allgemeinen Formel (1)

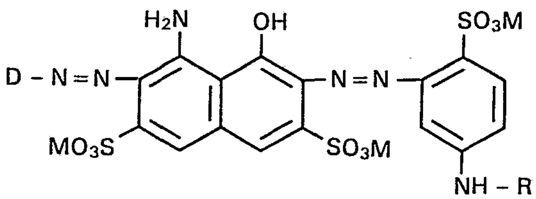

(1)

entsprechen. In dieser Formel bedeuten:

D ist der Phenylrest oder ein Naphthylrest, die beide jeweils durch eine Sulfogruppe und weiterhin durch einen oder zwei Substituenten aus der Gruppe Methyl, Ethyl, Methoxy, Ethoxy, Chlor, Brom und Carboxy substituiert sein können und die beide jeweils durch eine oder zwei Gruppen der allgemeinen Formel $-SO_2-X$ substituiert sind,

in welcher

X für die Vinylgruppe oder eine β-Sulfatoethyl-Gruppe steht;

M ist ein Wasserstoffatom oder ein Alkalimetall, wie Natrium, Kalium oder Lithium;

R ist der Acylrest einer aliphatischen oder aromatischen Carbonsäure oder einer aliphatischen oder aromatischen Sulfonsäure oder ein Rest der Formel (2a)

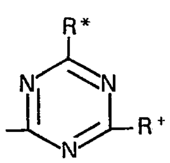

(2a)

in welcher

R* eine Sulfophenylamino-Gruppe, wie die m-Sulfophenylaminogruppe, die β-Sulfoethylamino- oder die N-Methyl-β-sulfoethylamino-Gruppe ist

und

$R^+$ für die Hydroxy-, Methoxy-, Ethoxy-, Amino- oder Methylamino-Gruppe steht.

Aromatische Carbonsäuren sind beispielsweise Naphthalincarbonsäuren und insbesondere die Benzoesäure und Phthalsäure und deren substituierten Abkömmlinge, wobei die Substituenten der Benzoesäure bevorzugt niedere Alkylgruppen, niedere Alkoxygruppen, Sulfogruppen, Halogenatome und Nitrogruppen sind. Aliphatische Carbonsäuren sind insbesondere niedere Alkancarbonsäuren und niedere Alkenylcarbonsäuren, die im aliphatischen Rest substituiert sein können, wie beispielsweise durch Substituenten aus der Gruppe Carboxy, Sulfo, Chlor, Brom und Hydroxy.

Aromatische Sulfonsäuren sind beispielsweise die Naphthalinsulfonsäuren und insbesondere die Benzolsulfonsäure und deren substituierten Abkömmlinge, wobei deren Substituenten insbesondere solche sind, die der Gruppe niederes Alkyl, Chlor und Nitro angehören. Aliphatische Sulfonsäuren sind insbesondere niedere Alkylsulfonsäuren.

Der Formelrest R ist beispielsweise ein Rest der Formel (2b) oder (2c)

| | |
|---|---|
| $-CO-R'$ | $-SO_2-R''$ |
| (2b) | (2c) |

in welchen

R' ein Wasserstoffatom oder eine niedere Alkylgruppe bedeutet, die durch 1 oder 2 Chloratome oder durch eine Sulfo- oder Carboxygruppe substituiert sein kann, oder eine niedere Alkenylgruppe bedeutet, die durch eine Carboxygruppe substituiert sein kann, oder die Phenylgruppe bedeutet, die durch einen oder zwei, vorzugsweise einen Substituenten aus der Gruppe Nitro, Chlor, Methyl, Ethyl, Methoxy, Ethoxy, Carboxy, und Sulfo substituiert sein kann, und

R" die Phenylgruppe ist, die durch einen oder zwei Substituenten, bevorzugt einen Substituenten, aus der Gruppe Methyl, Ethyl, Chlor und Nitro substituiert sein kann, oder eine niedere Alkylgruppe bedeutet.

Bevorzugt ist R der Acetyl-, Propionyl-, β-Chlorpropionyl- und Benzoylrest.

Der Formelrest D ist bevorzugt eine Gruppe der allgemeinen Formel (3a) oder (3b)

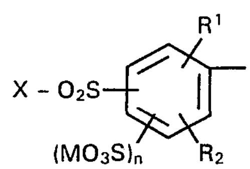

(3a)

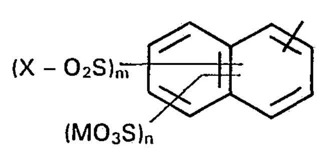

(3b)

in welchen

$R^1$ und $R^2$ zueinander gleich oder voneinander verschieden sein können und

$R^1$ ein Wasserstoffatom, eine Methylgruppe, Ethylgruppe, Methoxygruppe, Ethoxygruppe, Carboxygruppe, ein Chloratom oder ein Bromatom ist,

$R^2$ für ein Wasserstoffatom, eine Methylgruppe, Ethylgruppe, Methoxygruppe, Ethoxygruppe oder ein Chloratom steht,

m die Zahl 1 oder 2 bedeutet,

n für die Zahl Null oder 1 steht (wobei im Falle n gleich Null diese Gruppe ein Wasserstoffatom bedeutet) und

M und X die obengenannten Bedeutungen besitzen.

Bevorzugt ist $R^1$ ein Wasserstoffatom oder eine Methoxygruppe, und bevorzugt ist $R^2$ ein Wasserstoffatom oder eine Methoxygruppe.

Die Angabe «niedere» bedeutet im vorstehenden wie im folgenden, dass der damit bezeichnete Rest einen Alkylrest von 1 bis 4 C-Atomen oder eine Alkenylgruppe von 2 bis 4 C-Atomen enthält oder darstellt. Sulfogruppen sind Gruppen der allgemeinen Formel $-SO_3M$, Carboxygruppen Gruppen der allgemeinen Formel -COOM und Sulfatogruppen Gruppen der allgemeinen Formel $-OSO_3M$, in welchen M jeweils die obengenannte Bedeutung besitzt.

Die erfindungsgemässen Disazoverbindungen können in Form ihrer freien Säure und in Form ihrer Alkalimetallsalze vorliegen. Sie finden bevorzugt in Form dieser Salze ihre Verwendung zum Färben oder Bedrucken von hydroxy- und/oder carbonamidgruppenhaltigem Fasermaterial.

Die vorliegende Erfindung betrifft weiterhin ein Verfahren zur Herstellung dieser erfindungsgemässen Disazoverbindungen, das dadurch gekennzeichnet ist, dass man eine Monoazoverbindung der allgemeinen Formel (4)

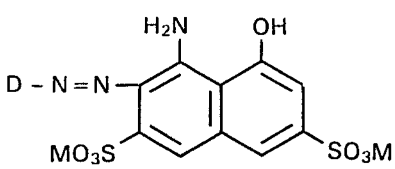

(4)

in welcher D und M die obengenannten Bedeutungen haben, mit der Diazoniumverbindung eines aromatischen Amins der allgemeinen Formel (5)

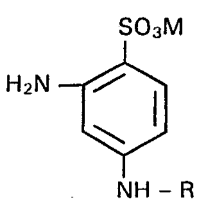

(5)

in welcher M und R die obengenannten Bedeutungen haben, kuppelt.

Die Kupplungsreaktion erfolgt analog bekannten Verfahrensweisen, beispielsweise im wässrigen Medium, im schwach sauren bis schwach alkalischen Bereich, vorzugsweise bei einem pH-Wert zwischen 3 und 8, insbesondere zwischen 4 und 7, und bei einer Temperatur zwischen 5 und 30°C, bevorzugt zwischen 10 und 25°C.

Die erfindungsgemässen Disazoverbindungen können aber auch in erfindungsgemässer Weise in einer sogenannten Eintopfreaktion hergestellt werden, die eine vorteilhafte Verfahrensweise darstellt, da sie auf die Isolierung der Zwischenstufen, wie insbesondere der Monoazoverbindung der allgemeinen Formel (4), verzichtet. Das Arbeiten nach dem Eintopfverfahren ist deshalb möglich, weil in überraschender Weise diese Eintopfreaktion zu einer einheitlichen Verbindung entsprechend der allgemeinen Formel (1) führt. Die vorliegende Erfindung betrifft somit auch ein Verfahren zur Herstellung der erfindungsgemässen Disazoverbindungen der allgemeinen Formel (1), das dadurch gekennzeichnet ist, dass man zwei diazotierte aromatische Amide der allgemeinen Formel $D-NH_2$ mit D der obengenannten Bedeutung und der Formel (5) in äquivalenter Menge mit 1-Amino-8-naphthol-3,6-disulfonsäure als bivalenter Kupplungskomponente im Gemisch in vorzugsweise wässrigem Medium zuerst bei einem pH-Wert zwischen 0 und 3, vorzugsweise zwischen 1 und 2, und anschliessend bei einem pH-Wert zwischen 3, 5 und 8, vorzugsweise zwischen 4 und 7, umsetzt; die Reaktionstemperatur beider Kupplungsschritte liegt zwischen 0 und 30°C, vorzugsweise zwischen 5 und 25°C.

Die Monoazoverbindungen entsprechend der allgemeinen Formel (4) sind bekannt; sie lassen sich analog bekannten Verfahrensweisen durch Umsetzung des Diazoniumsalzes eines aromatischen Amins der allgemeinen Formel $D-NH_2$ mit D der obengenannten Bedeutung mit 1-Amino-3,6-disulfo-8-naphthol in saurem Medium bei einem pH-Wert zwischen 0 und 3, vorzugsweise zwischen 1 und 2, und bei einer Temperatur zwischen 5 und 30°C herstellen.

Aromatische Amine entsprechend der allgemeinen Formel $D-NH_2$, die als Ausgangsverbindungen zur Herstellung der erfindungsgemässen Disazoverbindungen dienen, sind beispielsweise:

1-Aminobenzol-4-β-sulfatoethylsulfon, 1-Aminobenzol-4-vinylsulfon, 1-Aminobenzol-3-β-sulfatoethylsulfon, 1-Aminobenzol-3-vinylsulfon, 1-Aminobenzol-2-β-sulfatoethylsulfon, 1-Amino-2-methoxy-benzol-5-β-sulfatoethylsulfon, 1-Amino-2-methoxy-benzol-5-vinylsulfon, 1-Amino-4-methoxy-benzol-5-β-sulfatoethylsulfon, 1-Amino-3-methoxy-benzol-4-β-sulfatoethylsulfon, 1-Amino-2,5-dimethoxy-benzol-4-β-sulfatoethylsulfon, 1-Amino-2,5-dimethoxy-benzol-4-vinylsulfon, 1-Amino-2,4-dimethoxy-benzol-5-vinylsulfon, 1-Amino-2-methoxy-5-methyl-benzol-4-β-sulfatoethylsulfon, 1-Amino-2-methoxy-5-methyl-benzol-4-vinylsulfon, 1-Amino-2-methoxy-5-chlor-benzol-4-β-sulfatoethylsulfon, 1-Amino-2-chlor-benzol-5-β-sulfatoethylsulfon, 1-Amino-2,6-dichlor-benzol-4-β-sulfatoethylsulfon, 1-Amino-2-brom-benzol-4-β-sulfatoethylsulfon, 1-Aminobenzol-5-β-sulfatoethylsulfonyl-2-carbonsäure, 1-Aminobenzol-4-βsulfatoethylsulfonyl-2-sulfonsäure, 1-Aminonaphthalin-4-β-sulfatoethylsulfon, 1-Aminonaphthalin-5-β-sulfatoethylsulfon, 2-Aminonaphthalin-5-β-sulfatoethylsulfon, 2-Aminonaphthalin-6-β-sulfatoethylsulfon, 2-Aminonaphthalin-7-β-sulfatoethylsulfon, 2-Aminonaphthalin-4,8-bis-β-sulfatoethylsulfon, 2-Aminonaphthalin-6-β-sulfatoethylsulfonyl-1-sulfonsäure und 2-Aminonaphthalin-8-β-sulfatoethylsulfonyl-6-sulfonsäure.

Die als Ausgangsverbindungen dienenden aromatischen Amine der allgemeinen Formel (5) lassen sich in an und für sich üblicher und bekannter Verfahrensweise durch Umsetzung der 1,3-Diamino-benzol-4-sulfonsäure mit dem Säurechlorid oder Säureanhydrid der entsprechenden aromatischen Carbonsäure, aromatischen Sulfonsäure, aliphatischen Carbonsäure oder aliphatischen Sulfonsäure bzw. mit der

entsprechenden Cyanurchlorid-Verbindung herstellen. Solche Verfahrensweisen sind in der Literatur zahlreich bekannt.

Acylreste R sind beispielsweise die Formyl-, Acetyl-, Chloracetyl-, Propionyl-, β-Chlorpropionyl-, iso-Butyryl-, Maleinyl-, β-Sulfo-propionyl-, Ethylsulfonyl-, Benzoyl-, 4-Nitro-benzoyl-, 2,4-Dichlorbenzoyl-, 4-Chlormethyl-benzoyl- und Phenylsulfonyl-Gruppen und die durch Methylgruppen substituierten Phenylsulfonyl-Gruppen, wie der p-Toluolsulfonylrest, desweiteren der 4-Amino-6-(3-sulfophenyl)-amino-1,3,5-triazin-2-yl und 4-Hydroxy-6-(3-sulfophenyl)-amino-1,3,5-triazin-2-yl-Rest.

Die erfindungsgemässen Verbindungen lassen sich aus ihren Herstellungsgemischen nach allgemein bekannten Methoden für wasserlösliche Verbindungen isolieren, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung.

Falls die letztgenannte Art der Isolierung der erfindungsgemässen Verbindungen gewählt wird, empfiehlt es sich in Fällen, in denen die Reaktionslösung grössere Sulfatmengen enthält, vor dem Eindampfen das in den Lösungen vorhandene Sulfat durch Fällung als Calciumsulfat und Abtrennung durch Filtration zu entfernen. In manchen Fällen kann es auch wünschenswert sein, die Farbstofflösung, gegebenenfalls nach Aufkonzentration der färberischen Verwendung zuzuführen.

Die neuen Verbindungen der vorliegenden Erfindung eignen sich hervorragend als Farbstoffe, insbesondere als faserreaktive Farbstoffe, zum Färben oder Bedrucken von Materialien aus hydroxy- und/oder carbonatgruppenhaltigen Fasern, wie insbesondere aus nativer oder regenerierter Cellulose oder aus natürlichen, regenerierten oder synthetischen Polyamiden oder Polyurethanen, wie beispielsweise von Baumwolle, Hanf, Leinen, Jute, Viskosekunstseide, Wolle, Seide, Polyamid-6, Polyamid-6,6, Polyamid-11 oder Polyamid-4.

Besonders geeignet sind die neuen Verbindungen zum Färben und Bedrucken von Cellulosefasermaterialien.

Die neuen Verbindungen werden auf die genannten Substrate analog bekannten und üblichen Färbe- und Druckverfahren für wasserlösliche, insbesondere faserreaktive, Farbstoffe appliziert und fixiert. Sie besitzen eine gute bis sehr gute Löslichkeit und Stabilität in den Druckpasten und Färbebädern, zeigen eine hohe Farbstärke und einen guten Farbaufbau und liefern mit hohen Fixiergraden marineblaue bis schwarze Färbungen und Drucke, die sich, insbesondere bei den Färbungen und Drucken auf Cellulosefasern, durch gute bis sehr gute Gebrauchs- und Fabrikationsechtheiten, wie beispielsweise Licht-, Wasch-, Meerwasser-, Chlorbadewasser-, Säure- und Alkaliechtheiten, Überfärbeechtheiten, alkalische und saure Schweissechtheiten, Abgasechtheiten (Stickoxidechtheit) sowie Bügel-, Plissier-, Dekatier-, Trockenreinigungs- und Reibechtheiten, auszeichen. Nicht fixierte Farbstoffanteile lassen sich gut auswaschen. Ebenso besitzen die Färbungen und Drucke der erfindungsgemässen Verbindungen eine gute Beständigkeit gegenüber Kupferionen bzw. gegenüber solche abgebenden Stoffen. Bei der Anwendung der erfindungsgemässen Verbindungen zum Bedrucken von Cellulosefasermaterialien wird darüberhinaus eine Griffverhärtung des gefärbten Materials vermieden; weiterhin erhält man im Druck scharfe Konturen mit einem guten Weissfond. Die mit den erfindungsgemässen Verbindungen hergestellten Drucke und Färbungen flecken im nichtfixierten Zustand beim Ablegen und Abtafeln nicht ab bzw. bluten nicht aus.

Insbesondere sind jedoch die ausgezeichneten Lichtechtheiten der Färbungen und Drucke auf trockenem sowie mit wässrigen Lösungen imprägniertem Material hervorzuheben. Sehr gute Nasslichtechtheiten zeigen sich bei der Belichtung von Färbungen und Drucken, die mit destilliertem Wasser, mit Trinkwasser und mit alkalischen und sauren Schweisslösungen imprägniert wurden. Diese Nasslichtechtheiten haben inzwischen einen hohen Gebrauchswert erreicht.

Die vorliegende Erfindung betrifft weiterhin die Verwendung der erfindungsgemässen Verbindungen zum Färben oder Bedrucken der obengenannten Fasermaterialien bzw. ein Verfahren zum Färben oder Bedrucken der obengenannten Fasermaterialien, bei welchen die erfindungsgemässen Verbindungen analog bekannten und üblichen Verfahrenweisen der Färberei- und Druckereiindustrie auf das Fasermaterial appliziert und anschliessend fixiert werden. Beispielsweise werden diese Verfahren so ausgeführt, dass man Cellulosefasermaterialien in einem wässrigen, gegebenenfalls übliche Färbehilfsmittel enthaltenden Färbebad nach dem Ausziehverfahren aus langer Flotte unter Verwendung von alkalisch wirkenden Mitteln behandelt, insbesondere bei Temperaturen zwischen 60 und 105°C, wobei das Fasermaterial in sehr guten Farbausbeuten gefärbt wird. Mit den Klotzverfahren, die in der Technik bekannt und üblich sind, werden auf Cellulosefasermaterialien ebenfalls Färbungen mit ausgezeichneten Farbausbeuten erhalten; dieses Verfahren kann ein- oder zweiphasig durchgeführt werden, so dass die Fixierung mit Hilfe des alkalisch wirkenden Mittels, das gleichzeitig oder nachträglich zur Applikation des Farbstoffes auf das Fasermaterial aufgebracht wurde, oder durch Verweilen des geklotzten Fasermaterials für 5 Minuten bis 20 Stunden bei Raumtemperatur oder Temperaturen bis zu 60°C oder durch Dämpfen oder durch Behandlung mit Trockenhitze durchgeführt werden kann. Nicht fixierte Farbstoffanteile lassen sich leicht auswaschen.

Die Verwendung der erfindungsgemässen Verbindungen in Druckverfahren erfolgt analog den bekannten und üblichen Druck- und Fixiermethoden zum Färben von Cellulosefasern. Man kann hierbei bevorzugt so vorgehen, dass einphasig in Anwesenheit von Natriumbicarbonat oder anderer säurebindender Mittel, wie Kaliumbicarbonat, Natrium- oder Kaliumcarbonat, Natronlauge, Kalilauge oder Natriumtrichloracetat, in der Druckpaste und anschliessendes Dämpfen bei 101 - 103°C oder zweiphasig unter Bedrucken mit einer neutralen oder schwach

sauren Druckpaste und anschliessender Fixierung durch ein heisses, elektrolythaltiges, alkalisches Bad oder durch Überklotzen mit einer alkalischen, elektrolythaltigen Flotte und anschliessendem Verweilen, Dämpfen oder Behandlung mit Trockenhitze arbeitet; man erhält farbstarke Drucke mit gutem Stand der Konturen und einem klaren Weissfond. Die Drucke zeigen unabhängig von den Fixierbedingungen eine hohe Nuancenkonstanz.

Das Färben der Polyamid- oder Polyurethanfasern wird üblicherweise aus saurem Milieu ausgeführt. So kann man beispielsweise dem Färbebad Essigsäure oder einen Puffer aus Essigsäure und Ammoniumacetat zufügen, um den gewünschten pH-Wert zu erhalten. Zwecks Erreichung einer brauchbaren Egalität der Färbungen empfiehlt sich ein Zusatz an üblichen Egalisierhilfsmitteln, beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von Stearylamin mit Ethylenoxid. Die Färbungen können sowohl bei Siedetemperatur als auch bei 110 bis 120°C ausgeführt werden.

Die nachstehenden Beispiele dienen zur Erläuterung der Erfindung. Die formelmässig geschriebenen erfindungsgemässen Disazoverbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

*Beispiel 1*

28,1 Teile Aminobenzol-4-β-sulfatoethylsulfon werden in üblicher Weise in einer Mischung aus 100 Teilen Eiswasser und 30 Volumenteilen konzentrierter Salzsäure mit 14 Volumenteilen einer wässrigen 40%igen Natriumnitritlösung diazotiert. Nach Beendigung der Diazotierungsreaktion setzt man 31,9 Teile 1-Amino-8-naphthol-3,6-disulfonsäure hinzu, stellt den pH mittels Natriumcarbonat auf einen Wert von 1 bis 2 und vervollständigt die Kupplungsreaktion innerhalb dieses pH-Bereiches bei einer Temperatur um etwa 10°C bei 5stündigem Rühren.

Nach Beendigung der Kupplungsreaktion gibt man eine Diazoniumsalzsuspension aus 29,2 Teilen 3-Aminobenzanilid-4-sulfonsäure hinzu, die in üblicher Weise durch Diazotierung in einem Gemisch aus 50 Teilen Wasser und 30 Volumenteilen konzentrierter Salzsäure bei einer Temperatur zwischen 0 und 10°C durch Zugabe von 14 Volumenteilen einer wässrigen 40%igen Natriumnitritlösung hergestellt wurde. Mit konzentrierter Natronlauge stellt man den pH dieses Kupplungsgemisches auf einen Wert zwischen 10 und 11, rührt eine Stunde bei 20 bis 30°C unter Einhaltung dieses pH-Bereiches, gibt sodann konzentrierte Salzsäure bis zu einem pH-Wert von 7 hinzu und salzt die erhaltene Disazoverbindung mittels Natriumchlorid aus. Nach Abfiltration und Trocknen erhält man 124,8 Teile eines schwarzen Farbstoffpulvers, das zu etwa 58% das Natriumsalz der Verbindung der Formel

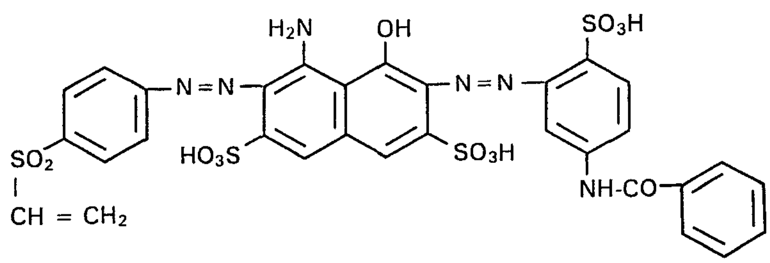

enthält. Diese erfindungsgemässe Verbindung (Salz) hat gute faserreaktive Farbstoffeigenschaften und liefert auf den in der Beschreibung genannten Fasermaterialien, wie insbesondere auf Cellulosefasermaterialien, beispielsweise auf Baumwolle, nach den für faserreaktive Farbstoffe gebräuchlichen Färbe- und Druckverfahren farbstarke marineblaue Färbungen und Drucke mit guten bis sehr guten Gebrauchsechtheiten, von denen vor allem die ausgezeichneten Lichtechtheiten auf trockenem und mit wässrigen Lösungen imprägniertem Gewebe hervorzuheben sind.

*Beispiel 2*

Zu einer neutralen Lösung des Natriumsalzes von 21,6 Teilen 1,3-Diaminobenzol-4-sulfonsäure in 40 Teilen Wasser werden 11,6 Teile Natriumbicarbonat zugesetzt, und die Lösung wird auf 40°C erwärmt. Im Verlaufe von einer Stunde lässt man 14,1 Teile Acetanhydrid hinzulaufen, rührt eine Stunde weiter, versetzt das Reaktionsgemisch sodann mit 28,1 Teilen Aminobenzol-4-β-sulfatoethylsulfon und anschliessend mit einem Gemisch aus 29,5 Teilen 96%iger Schwefelsäure und 85 Teilen Eis und diazotiert beide Diazokomponenten unter Rühren durch Zugabe von 26,5 Volumenteilen einer wässrigen 40%igen Natriumnitritlösung im Verlaufe einer Stunde. Es wird noch eine Stunde bei einem pH-Wert unter 1 nachgerührt und überschüssiges Nitrit, wie üblich, mittels wenig Amidosulfonsäure zerstört.

Nach Beendigung der Diazotierungsreaktion gibt man zu diesem Gemisch 30 Teile 1-Amino-8-naphthol-3,6-disulfonsäure, stellt einen pH-Wert von etwa 1,6 mittels 7,7 Teilen Natriumbicarbonat ein,

rührt den Kupplungsansatz 10 bis 15 Stunden bei einer Temperatur unter 10°C, gibt anschliessend wiederum 37 Teile Natriumbicarbonat hinzu, um das Reaktionsgemisch auf einen pH-Wert zwischen 6 und 7 einzustellen, erhöht die Temperatur des Kupplungsansatzes auf 20 bis 25°C, rührt einige Zeit weiter und entfernt sodann unlösliche Verunreinigungen durch Filtration des Reaktionsgemisches.

Die erhaltene erfindungsgemässe Disazoverbindung kann beispielsweise durch Eindampfen der Reaktionslösung bei 90 bis 100°C unter reduziertem Druck isoliert werden; auf diese Weise werden 157,6 Teile eines dunkelblauen Farbstoffpulvers erhalten, das 75,5 Teile der nachfolgend formelmässig angegebenen Disazoverbindung

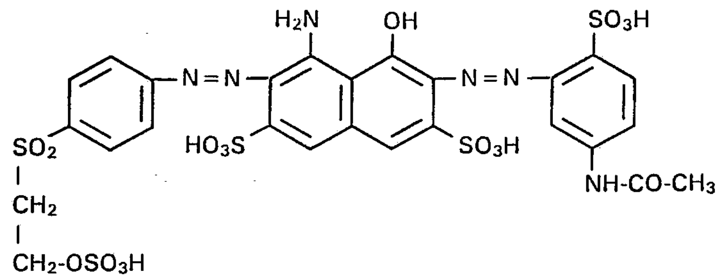

in Form des Natriumsalzes enthält. Diese erfindungsgemässe Verbindung zeigt sehr gute faserreaktive Farbstoffeigenschaften und liefert nach den in der Technik für faserreaktive Farbstoffe üblichen Applikations- und Fixiermethoden beispielsweise auf Fasermaterialien farbstarke marineblaue Färbungen und Drucke von guten Gebrauchsechtheiten, wie insbesondere sehr guten Lichtechtheiten auf trockenem und feuchtem Gewebe.

*Beispiel 3*

Eine neutrale Lösung mit einer Temperatur von 0°C des Natriumsalzes von 34,1 Teilen 2,5-Dimethoxyanilin-4-β-sulfatoethylsulfon in 100 Teilen Wasser werden zunächst mit 10 Volumenteilen konzentrierter Schwefelsäure, sodann unter Rühren mit 14 Volumenteilen einer wässrigen 40%igen Natriumnitritlösung versetzt. Der Diazotierungsansatz wird noch eine Stunde gerührt und gegebenenfalls überschüssiges Nitrit, wie üblich, mit Amidosulfonsäure zerstört.

In die Suspension des Diazoniumsalzes gibt man 30,3 Teile 1-Amino-8-naphthol-3,6-disulfonsäure, rührt diesen Kupplungsansatz zwölf Stunden bei einer Temperatur von 0 bis 5°C und einem pH-Wert von 1,0 bis 1,3, der mittels Natriumcarbonat gehalten wird.

Nach beendeter Kupplungsreaktion gibt man zu diesem Ansatz die wässrige Suspension der äquivalenten Menge des Diazoniumsalzes der 3-Propionylamino-anilin-6-sulfonsäure als 2. Diazokomponente, die wie folgt hergestellt wurde: 23,5 Teile 1,3-Phenylendiamin-4-sulfonsäure werden in 32 Teilen Wasser mit 9,5 Teilen einer konzentriert wässrigen Natronlauge suspendiert und sodann mit 12,5 Teilen Natriumbicarbonat versetzt; anschliessend werden bei einer Temperatur zwischen 20 und 30°C im Verlaufe von 1 bis 2 Stunden 23,6 Teile Propionsäureanhydrid zugegeben. Es wird noch eine Stunde nachgerührt, sodann werden 100 Teile Eis, 9 Volumenteile konzentrierte Schwefelsäure und 13,5 Volumenteile einer wässrigen 40%igen Natriumnitritlösung hinzugegeben. Man rührt bei einer Temperatur von unter 10°C noch 3 bis 4 Stunden lang nach, zerstört überschüssiges Nitrit mittels Amidosulfonsäure und rührt sodann das erhaltene Reaktionsgemisch in die oben beschriebene Suspension der Monoazoverbindung ein.

Diese zweite Kupplungsreaktion erfolgt bei einem pH-Wert von etwa 7 nach Neutralisation mit Natriumcarbonat und bei einer Reaktionstemperatur von 25°C.

Nach beendeter Kupplung wird die erfindungsgemässe Disazoverbindung in üblicher Weise, wie durch Aussalzen mittels Natriumchlorid oder durch Eindampfen der auf einen pH-Wert von 5 bis 6 eingestellten und zuvor geklärten Syntheselösung, beispielsweise durch Sprühtrocknung, isoliert. Man erhält das Natriumsalz der Verbindung der Formel

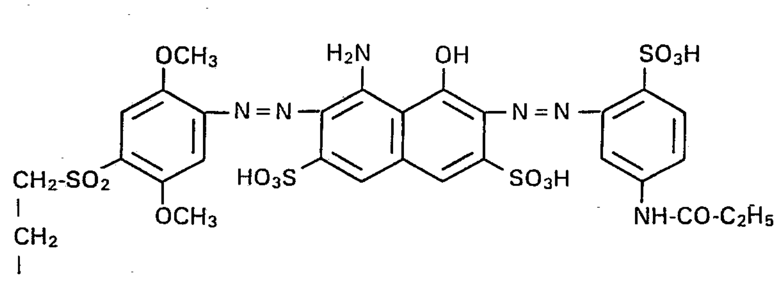

(bei Sprühtrocknung 158,3 Teile eines 52%igen schwarzen Farbstoffpulvers). Die erfindungsgemässe Disazoverbindung besitzt sehr gute faserreaktive Farbstoffeigenschaften. Sie liefert nach den in der Technik üblichen Applikations- und Fixiermethoden für faserreaktive Farbstoffe auf Cellulosefasermaterialien farbstarke grünstichig blaue Drucke und Färbungen mit guten Gebrauchsechtheiten, insbesondere ausgezeichneten Lichtechtheiten der Färbungen (und Drucke) auf trockenem und auf feuchtem Gewebe, wie auf Färbungen (und Drucken), die mit Trinkwasser, mit destilliertem Wasser oder mit alkalischen oder sauren Schweisslösungen imprägniert wurden.

*Beispiele 4 bis 95*

Man verfährt zur Herstellung der in den nachfolgenden Tabellenbeispielen durch ihre Diazokomponenten und durch ihre Kupplungskomponente charakterisierten erfindungsgemässen Disazoverbindungen in erfindungsgemässer Weise, beispielsweise analog den in den obigen Ausführungsbeispielen beschriebenen Verfahrensvarianten, durch Umsetzung der ersten Diazoniumverbindung des genannten Amins entsprechend den allgemeinen Formeln (3) mit 3,6-Disulfo-1,8-aminonaphthol als Kupplungskomponente im stark sauren Bereich und anschliessend durch Umsetzung dieser Monoazoverbindung mit dem zweiten Diazoniumsalz des aromatischen Amins entsprechend der allgemeinen Formel (5) im schwach sauren bis neutralen Bereich, gegebenenfalls schwach alkalischen Bereich.

Diese Disazoverbindungen stellen ebenso sehr gute fasereaktive Farbstoffe dar, die gute bis sehr gute anwendungstechnische Eigenschaften besitzen und auf den in der Beschreibung genannten Fasermaterialien, insbesondere auf Cellulose, farbstarke Färbungen und Drucke mit guten Echtheiten, insbesondere guten Trocken- und Nasslichtechtheiten, liefern; die Farbtöne der mit diesen Disazoverbindungen erhältlichen Färbungen, die in der Nuance je nach Farbtiefe variieren können, sind für den jeweiligen erfindungsgemässen Disazofarbstoff in der Tabelle in abgekürzter Form durch einen Buchstaben bezeichnet, wobei diese die folgende Bedeutungen haben:

(a) = marineblau

(b) = grünstichig marineblau.

Disazoverbindung (1) mit

| Beispiel | 1. Diazokomponente der Formel (3) | 2. Diazokomponente der Formel (5) mit R gleich: | Nuance auf Baumwolle |
|---|---|---|---|
| 4 | 4-β-Sulfatoethylsulfonyl-anilin | Benzoyl | (b) |
| 5 | - dito - | p-Toluolsulfonyl | (b) |
| 6 | - dito - | 4-Nitrobenzoyl | (b) |
| 7 | - dito - | Chloracetyl | (a) |
| 8 | - dito - | Dichloracetyl | (a) |
| 9 | - dito - | β-Chlorpropionyl | (a) |
| 10 | - dito - | Maleinyl | (a) |
| 11 | - dito - | Ethansulfonyl | (a) |
| 12 | - dito - | 2,4-Dichlorbenzoyl | (b) |
| 13 | - dito - | Phthaloyl | (a) |
| 14 | 4-Vinylsulfonyl-anilin | Acetyl | (a) |
| 15 | - dito - | Benzolsulfonyl | (b) |
| 16 | - dito - | Chloracetyl | (a) |
| 17 | 3-Vinylsulfonyl-anilin | Acetyl | (a) |
| 18 | - dito - | Benzoyl | (b) |
| 19 | - dito - | Propionyl | (a) |
| 20 | 3-β-Sulfatoethylsulfonyl-anilin | Acetyl | (a) |
| 21 | - dito - | Benzoyl | (a) |
| 22 | - dito - | Propionyl | (a) |
| 23 | 2-β-Sulfatoethylsulfonyl-anilin | Acetyl | (a) |
| 24 | - dito - | Propionyl | (a) |
| 25 | - dito - | Chloracetyl | (a) |
| 26 | - dito - | Benzoyl | (b) |
| 27 | - dito - | p-Toluolsulfonyl | (b) |
| 28 | - dito - | β-Chlorpropionyl | (a) |
| 29 | - dito - | Acetyl | (a) |
| 30 | 2-Methoxy-4-β-sulfatoethylsulfonyl-anilin | Benzoyl | (b) |
| 31 | - dito - | Propionyl | (b) |
| 32 | - dito - | Acetyl | (b) |

| Beispiel | 1. Diazokomponente(3) | 2. Diazokomponente (5) mit R gleich: | Nuance auf Baumwolle |
|---|---|---|---|
| 33 | 4-Methoxy-5-β-sulfatoethylsulfonyl-anilin | Acetyl | (b) |
| 34 | - dito - | Propionyl | (b) |
| 35 | - dito - | Benzoyl | (b) |
| 36 | - dito - | Tosyl | (b) |
| 37 | 2-Methoxy-5-β-sulfatoethylsulfonyl-anilin | Tosyl | (b) |
| 38 | - dito - | Benzoyl | (b) |
| 39 | - dito - | Propionyl | (b) |
| 40 | - dito - | Acetyl | (b) |
| 41 | - dito - | 4-Nitrobenzoyl | (b) |
| 42 | 2-Methoxy-5-vinylsulfonyl-anilin | Acetyl | (b) |
| 43 | - dito - | Benzoyl | (b) |
| 44 | - dito - | Maleinyl | (b) |
| 45 | 2-Chlor-5-β-sulfatoethylsulfonyl-anilin | Acetyl | (b) |
| 46 | - dito - | Benzoyl | (b) |
| 47 | 2-Carboxy-5-β-sulfatoethylsulfonyl-anilin | Acetyl | (b) |
| 48 | 4-β-Sulfatoethylsulfonyl-anilin-2-sulfonsäure | Acetyl | (b) |
| 49 | - dito - | Benzoyl | (b) |
| 50 | - dito - | Propionyl | (b) |
| 51 | 4-Vinylsulfonylanilin-2-sulfonsäure | Acetyl | (b) |
| 52 | - dito - | Benzoyl | (b) |
| 53 | - dito - | Propionyl | (b) |
| 54 | - dito - | Tosyl | (b) |
| 55 | - dito - | Mesyl | (b) |
| 56 | 2-Methoxy-5-methyl-4-β-sulfatoethyl-sulfonyl-anilin | Acetyl | (b) |
| 57 | - dito - | Benzoyl | (b) |
| 58 | - dito - | Propionyl | (b) |
| 59 | - dito - | Tosyl | (b) |
| 60 | 2,4-Dimethoxy-5-β-sulfatoethylsulfonyl-anilin | Acetyl | (b) |
| 61 | - dito - | Benzoyl | (b) |
| 62 | 2,5-Dimethoxy-4-β-sulfatoethylsulfonyl-anilin | Acetyl | (b) |
| 63 | - dito - | Propionyl | (b) |
| 64 | - dito - | Tosyl | (b) |
| 65 | - dito - | Maleinyl | (b) |
| 66 | 2,5-Diethoxy-4-β-sulfatoethylsulfonyl-anilin | Acetyl | (b) |
| 67 | - dito - | Benzoyl | (b) |
| 68 | - dito - | Propionyl | (b) |
| 69 | - dito - | 4-Amino-6-(3-sulfophenyl)-amino-1,3,5-triazinyl | (b) |
| 70 | 4-Vinylsulfonyl-anilin | - dito - | (a) |
| 71 | - dito - | 4-Hydroxy-6-(3-sulfophenyl-amino)-1,3,5-triazinyl | (a) |
| 72 | 2,5-Dimethoxy-4-β-sulfatoethylsulfonyl-anilin | - dito - | (b) |
| 73 | 4-β-Sulfatoethylsulfonyl-1-naphthylamin | Acetyl | (a) |
| 74 | - dito - | Benzoyl | (b) |
| 75 | 5-β-Sulfatoethylsulfonyl-2-naphthylamin | Acetyl | (b) |
| 76 | - dito - | Benzoyl | (b) |
| 77 | 6-β-Sulfatoethylsulfonyl-2-naphthylamin | Benzoyl | (b) |
| 78 | - dito - | Acetyl | (b) |
| 79 | 7-β-Sulfatoethylsulfonyl-2-naphthylamin | Acetyl | (b) |
| 80 | - dito - | Benzoyl | (b) |

| Beispiel | 1. Diazokomponente(3) | 2. Diazokomponente (5) mit R gleich: | Nuance auf Baumwolle |
|---|---|---|---|
| 81 | 8-β-Sulfatoethylsulfonyl-2-naphthylamin | Benzoyl | (b) |
| 82 | - dito - | Acetyl | (b) |
| 83 | 8-β-Sulfatoethylsulfonyl-2-naphthylamin-6-sulfonsäure | Acetyl | (b) |
| 84 | - dito - | Benzoyl | (b) |
| 85 | 8-Vinylsulfonyl-2-naphthylamin-6-sulfonsäure | Benzoyl | (b) |
| 86 | - dito - | Acetyl | (b) |
| 87 | 6-β-Sulfatoethylsulfonyl-2-naphthylamin-1-sulfonsäure | Acetyl | (b) |
| 88 | - dito - | Benzoyl | (b) |
| 89 | - dito - | Propionyl | (b) |
| 90 | 6-Vinylsulfonyl-2-naphthylamin-1-sulfonsäure | Acetyl | (b) |
| 91 | - dito - | Tosyl | (b) |
| 92 | 4,8-Bis-β-sulfatoethylsulfonyl-2-naphthylamin | Acetyl | (b) |
| 93 | - dito - | β-Chlor-propionyl | (b) |
| 94 | - dito - | Benzoyl | (b) |
| 95 | - dito - | Propionyl | (b) |
| 96 | 2-Brom-4-β-sulfatoethylsulfonyl-anilin | Acetyl | (a) |
| 97 | 2,6-Dichlor-4-β-sulfatoethylsulfonyl-anilin | Acetyl | (a) |
| 98 | 4-β-Sulfatoethylsulfonyl-anilin-6-sulfonsäure | Acetyl | (b) |
| 99 | - dito - | Benzoyl | (b) |
| 100 | 3-β-Sulfatoethylsulfonyl-anilin-6-sulfonsäure | Benzoyl | (b) |
| 101 | - dito - | Acetyl | (a) |
| 102 | 3-β-Sulfatoethylsulfonyl-anilin-6-carbonsäure | Acetyl | (a) |
| 103 | - dito - | Benzoyl | (b) |
| 104 | 4-β-Sulfatoethylsulfonyl-anilin-6-carbonsäure | Benzoyl | (b) |
| 105 | - dito - | Acetyl | (a) |

**Patentansprüche**

1. Disazoverbindungen der allgemeinen Formel (1)

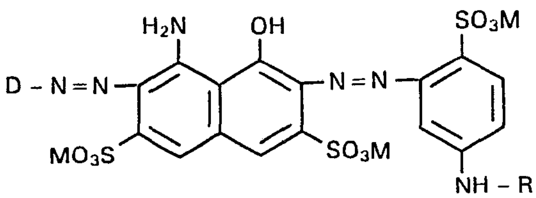
(1)

in welcher bedeuten:

D ist der Phenylrest oder ein Naphthylrest, die beide jeweils durch eine Sulfogruppe der allgemeinen Formel $-SO_3M$ und weiterhin durch einen oder zwei Substituenten aus der Gruppe Methyl, Ethyl, Methoxy, Ethoxy, Chlor, Brom und Carboxy der allgemeinen Formel -COOM substituiert sein können und die beide jeweils durch eine oder zwei Gruppen der allgemeinen Formel $-SO_2-X$ substituiert sind,

in welcher

X für die Vinylgruppe oder eine β-Sulfatoethyl-Gruppe der allgemeinen Formel $-CH_2-CH_2-OSO_3M$ steht;

M ist ein Wasserstoffatom oder ein Alkalimetall;

R ist der Acylrest einer aliphatischen oder aromatischen Carbonsäure oder einer aliphatischen oder aromatischen Sulfonsäure oder ein Rest der Formel (2a)

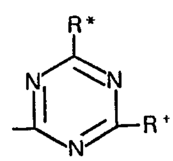
(2a)

in welcher

$R^*$ eine Sulfophenylamino-Gruppe, die β-Sulfoethylamino- oder die N-Methyl-β-sulfoethylamino-Gruppe ist und

$R^+$ für die Hydroxy-, Methoxy-, Ethoxy-, Amino- oder Methylamino-Gruppe steht.

2. Disazoverbindungen nach Anspruch 1, in welchen R ein Rest der Formel (2b) oder (2c)

$-CO-R'$ (2b) $-SO_2-R''$ (2c)

ist, in welchen

R' ein Wasserstoffatom oder eine niedere ($C_1$ bis $C_4$) Alkylgruppe bedeutet, die durch 1 oder 2

Chloratome oder durch eine Sulfo- oder Carboxygruppe substituiert sein kann, oder eine niedere ($C_2$ bis $C_4$) Alkenylgruppe bedeutet, die durch eine Carboxygruppe substituiert sein kann, oder die Phenylgruppe bedeutet, die durch einen oder zwei Substituenten aus der Gruppe Nitro, Chlor, Methyl, Ethyl, Methoxy, Ethoxy, Carboxy, und Sulfo substituiert sein kann, und

R″ die Phenylgruppe ist, die durch einen oder zwei Substituenten, aus der Gruppe Methyl, Ethyl, Chlor und Nitro substituiert sein kann, oder eine niedere Alkylgruppe bedeutet.

3. Disazoverbindungen nach Anspruch 2, in welchen R der Acetyl-, Propionyl-, β-Chlorpropionyl- und Benzoylrest ist.

4. Disazoverbindungen nach einen der Ansprüche 1 bis 3, in welchen D eine Gruppe der allgemeinen Formel (3a) oder (3b)

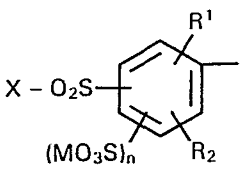

(3a)

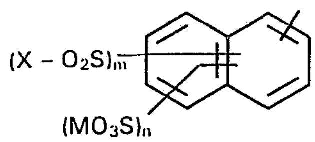

(3b)

ist, in welchen

$R^1$ und $R^2$ zueinander gleich oder voneinander verschieden sein können und

$R^1$ ein Wasserstoffatom, eine Methylgruppe, Ethylgruppe, Methoxygruppe, Ethoxygruppe, Carboxygruppe der allgemeinen Formel -COOM oder ein Chloratom oder ein Bromatom ist,

$R^2$ für ein Wasserstoffatom, eine Methylgruppe, Ethylgruppe, Methoxygruppe, Ethoxygruppe oder ein Chloratom steht,

m die Zahl 1 oder 2 bedeutet,

n für die Zahl Null oder 1 steht (wobei im Falle n gleich Null diese Gruppe ein Wasserstoffatom bedeutet) und

M und X die in Anspruch 1 genannten Bedeutungen besitzen.

5. Disazoverbindungen nach einem der Ansprüche 1 bis 3, in welchen D eine Gruppe der allgemeinen Formel (3a)

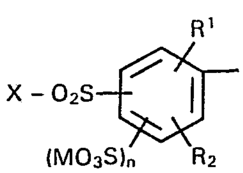

(3a)

ist, in welcher

$R^1$ und $R^2$ zueinander gleich oder voneinander verschieden sein können und jedes ein Wasserstoffatom oder eine Methoxygruppe bedeutet sowie n für die Zahl Null oder 1 steht und M und X die in Anspruch 1 genannten Bedeutungen besitzen.

6. Disazoverbindungen nach einem der Ansprüche 1 bis 3, dadurch gekennzeichnet, dass D der 1-Sulfo-6-(β-sulfatoethylsulfonyl)-2-naphthyl- oder 1-Sulfo-6-vinylsulfonyl-2-naphthyl-Rest ist.

7. Disazoverbindungen nach einem der Ansprüche 1 bis 3, in welchen D der 4-(β-Sulfatoethylsulfonyl)-phenyl- oder 4-Vinylsulfonyl-phenyl-Rest ist.

8. Disazoverbindungen nach einem der Ansprüche 1 bis 3, in welchen D der 2-Sulfo-4-(β-sulfatoethylsulfonyl)-phenyl- oder der 2-Sulfo-4-vinylsulfonyl-pheynl-Rest ist.

9. Disazoverbindungen nach einem der Ansprüche 1 bis 3, dadurch gekennzeichnet, dass D der 2,5-Dimethoxy-4-(β-sulfatoethylsulfonyl)-phenyl- oder der 2,5-Dimethoxy-4-vinylsulfonyl-phenyl-Rest ist.

10. Disazoverbindungen nach einem der Ansprüche 1 bis 3, in welchen D der 2-Methoxy-5-(β-sulfatoethylsulfonyl)-phenyl- oder der 2-Methoxy-5-vinylsulfonyl-phenyl-Rest ist.

11. Disazoverbindungen nach Anspruch 1 oder nach einem der Ansprüche 4 bis 10, in welchen R für die Acetylgruppe steht.

12. Disazoverbindungen nach Anspruch 1 oder nach einem der Ansprüche 4 bis 10, in welchen R die Propionylgruppe bedeutet.

13. Disazoverbindungen nach Anspruch 1 oder nach einem der Ansprüche 4 bis 10, in welchen R die β-Chlorpropionyl-Gruppe bedeutet.

14. Verfahren zur Herstellung der in Anspruch 1 genannten und definierten Disazoverbindungen der allgemeinen Formel (1), dadurch gekennzeichnet, dass man eine Monoazoverbindung der allgemeinen Formel (4)

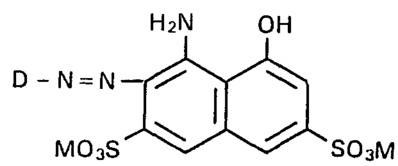

(4)

in welcher D und M die in Anspruch 1 genannten Bedeutungen haben, mit der Diazoniumverbindung eines aromatischen Amins der allgemeinen Formel (5)

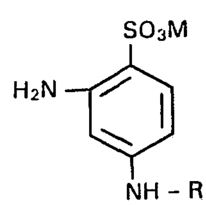

(5)

in welcher M und R die in Anspruch 1 genannten Bedeutungen haben, kuppelt,
oder dass man in einer Eintopfreaktion ein diazotiertes aromatisches Amin der obengenannten und definierten allgemeinen Formel $D\text{-}NH_2$ und ein diazotiertes aromatisches Amin der obengenannten und

definierten allgemeinen Formel (5) in äquivalenter Menge mit 1-Amino-8-naphthol-3,6-disulfonsäure im Gemisch zunächst bei einem pH-Wert zwischen 0 und 3 und sodann bei einem pH-Wert zwischen 3, 5 und 8 umsetzt.

15. Verwendung der Disazoverbindungen nach Anspruch 1 oder der nach Anspruch 14 hergestellten Disazoverbindungen als Farbstoffe.

16. Verwendung nach Anspruch 15 zum Färben oder Bedrucken von hydroxy- und/oder carbonamidgruppenhaltigem Fasermaterial.

**Claims**

1. Disazo compounds of the general formula (1)

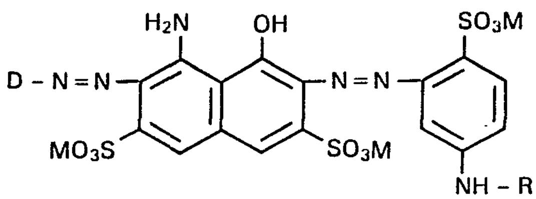

(1)

in which

D is the phenyl radical or a naphthyl radical, both of which can be substituted by a sulfo group of the formula $-SO_3M$ and furthermore by one or two substituents from the group comprising methyl, ethyl, methoxy, ethoxy, chlorine, bromine and carboxy of the general formula -COOM, and each of which is substituted by one or two groups of the general formula $-SO_2-X$,

in which

X represents the vinyl group or a β-sulfatoethyl group of the general formula $-CH_2-CH_2-OSO_2M$;

M is a hydrogen atom or an alkali metal;

R is the acyl radical of an aliphatic or aromatic carboxylic acid or of an aliphatic or aromatic sulfonic acid or a radical of the formula (2a)

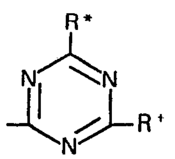

(2a)

in which

R* is a sulfophenylamino group, the β-sulfoethylamino group or the N-methyl-β-sulfoethylamino group, and

$R^+$ represents the hydroxy, methoxy, ethoxy, amino or methylamino group.

2. Disazo compounds according to claim 1, in which R is a radical of the formula (2b) or (2c)

$$-CO-R' \quad (2b) \qquad -SO_2-R'' \quad (2c)$$

in which

R' denotes a hydrogen atom or a lower ($C_1$ to $C_4$) alkyl group which can be substituted by 1 or 2 chlorine atoms or by one sulfo or carboxy group, or denotes a lower ($C_2$ to $C_4$) alkenyl group which can be substituted by a carboxy group, or denotes the phenyl group which can be substituted by one or two substituents from the group comprising nitro, chlorine, methyl, ethyl, methoxy, ethoxy, carboxy and sulfo, and

R'' is the phenyl group which can be substituted by one or two substituents from the group comprising methyl, ethyl, chlorine and nitro, or denotes a lower alkyl group.

3. Disazo compounds according to claim 2, in which R is the acetyl, propionyl, β-chloropropionyl or benzoyl radical.

4. Disazo compounds according to any one of claims 1 to 3, in which D is a group of the general formula (3a) or (3b)

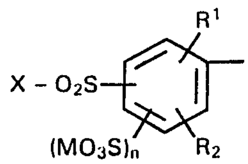

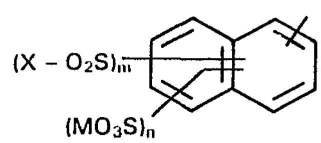

(3a) (3b)

in which

$R^1$ and $R^2$ can be identical to one another or different from one another and

$R^1$ is a hydrogen atom, a methyl group, ethyl group, methoxy group, ethoxy group or carboxy group of the general formula -COOM or a chlorine atom or a bromine atom,

$R^2$ represents a hydrogen atom, a methyl group, ethyl group, methoxy group or ethoxy group or a chlorine atom,

m denotes the number 1 or 2,

n represents the number zero or 1 (this group denoting a hydrogen atom if n is zero) and

M and X have the meanings given in claim 1.

5. Disazo compounds according to any one of claims 1 to 3, in which D is a group of the general formula (3a) (3a)

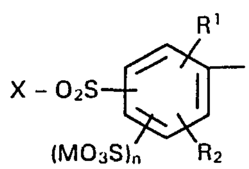

(3a)

in which

$R^1$ and $R^2$ can be identical to one another or different from one another and each denotes a hydrogen atom or a methoxy group, and n represents the number zero or 1 and M and X have the meanings given in claim 1.

6. Disazo compounds according to any one of claims 1 to 3 characterized by that D is the 1-sulfo-6-(β-sulfatoethylsulfonyl)-2-naphthyl or 1-sulfo-6-vinylsulfonyl-2-naphthyl radical.

7. Disazo compounds according to any one of claims 1 to 3, in which D is the 4-(β-sulfatoethylsulfonyl)-phenyl or 4-vinylsulfonyl-phenyl radical.

8. Disazo compounds according to any one of claims 1 to 3, in which D is the 2-sulfo-4-(β-sulfatoethylsulfonyl)-phenyl or 2-sulfo-4-vinylsulfonyl-phenyl radical.

9. Disazo compounds according to any one of claims 1 to 3, in which D is the 2,5-dimethoxy-4-(β-sulfatoethylsulfonyl)-phenyl or 2,5-dimethoxy-4-vinylsulfonyl-phenyl radical.

10. Disazo compounds according to any one of claims 1 to 3, in which D is the 2-methoxy-5-(β-sulfatoethylsulfonyl)-phenyl or 2-methoxy-5-vinylsulfonyl-phenyl radical.

11. Disazo compounds according to claim 1 or according to any one of claims 4 to 10, in which R represents the acetyl group.

12. Disazo compounds according to claim 1 or according to any one of claims 4 to 10, in which R denotes the propionyl group.

13. Disazo compounds according to claim 1 or according to any one of claims 4 to 10, in which R denotes the β-chloropropionyl group.

14. Process for the preparation of disazo compounds of the general formula (1) mentioned and defined in claim 1, characterized by that a monoazo compound of the general formula (4)

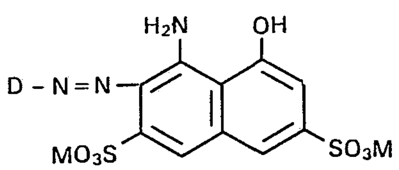

(4)

in which D and M have the meanings given in claim 1, is coupled with the diazonium compound of an aromatic amine of the general formula (5)

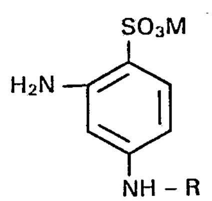

(5)

in which M and R have the meanings given in claim 1,
or that a diazotized aromatic amine of the general formula $D-NH_2$ mentioned above and defined, and a diazotized aromatic amine of the general formula (5) mentioned above and defined, are reacted in equivalent amounts in a one-pot reaction with 1-amino-8-naphthol-3,6-disulfonic acid in a mixture first at a pH value between 0 and 3 and then at a pH value between 3.5 and 8.

15. Use of disazo compounds according to claim 1 or of disazo compounds prepared according to claim 14, as a dyestuff.

16. The use according to claim 15 for dyeing or printing fiber material containing hydroxy groups and/or carboxamide groups.

**Revendications**

1. Composés disazoïques répondant à la formule générale 1

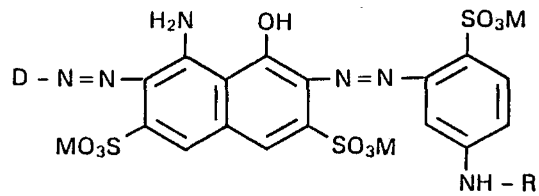

(1)

dans laquelle

D représente un radical phényle ou un radical naphtyle, chacun de ces deux radicaux pouvant porter un radical sulfo de formule générale $-SO_3M$ et, en plus, un ou deux substituants pris dans l'ensemble constitué par les radicaux méthyle, éthyle, méthoxy, éthoxy, chloro, bromo et carboxy de formule générale -COOM et chacun d'eux portant un ou deux radicaux répondant à la formule générale-$SO_2$-X

dans laquelle

X désigne un radical vinyle ou un radical sulfato-2 éthyle de formule générale $-CH_2-CH_2-OSO_3M$,

M représente un atome d'hydrogène ou un métal alcalin, et

R représente le radical acyle d'une acide carboxylique aliphatique our aromatique ou d'un acide sulfonique aliphatique ou aromatique, ou un radical répondant à la formule 2a

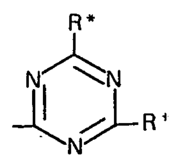

(2a)

dans laquelle

R* représente un radical sulfophénylamino, un radical sulfo-2 éthylamino ou un radical N-méthyl-(sulfo-2 éthyl)-amino, et

$R^+$ représente un radical hydroxy, methoxy, éthoxy, amino ou méthylamino.

2. Composés disazoïques selon la revendication 1, dans lesquels R représente un radical répondant à l'une des formules 2b et 2c

| | |
|---|---|
| - CO - R' | - $SO_2$ - R'' |
| (2b) | (2c) |

dans lesquelles

R' représente un atome d'hydrogène, un alkyle inférieur (en $C_1$-$C_4$) éventuellement porteur d'un ou de deux atomes de chlore ou d'un radical sulfo ou carboxy, un alcényle inférieur (en $C_2$-$C_4$) éventuellement porteur d'un radical carboxy, ou un phényle éventuellement porteur d'un ou de deux substituants pris dans l'ensemble constitué

par les radicaux nitro, chloro, méthyle, éthyle, méthoxy, éthoxy, carboxy et sulfo, et

R'' représente un radical phényle éventuellement porteur d'un ou de deux substituants pris dans l'ensemble constitué par les radicaux méthyle, éthyle, chloro et nitro, ou un alkyle inférieur.

3. Composés disazoïques selon la revendication 2, dans lesquels R représente un radical acétyle, propionyle, chloro-3 propionyle ou benzoyle.

4. Composés disazoïques selon l'une quelconque des revendications 1 à 3 dans lesquels D représente un radical répondant à l'une des formules générales 3a et 3b

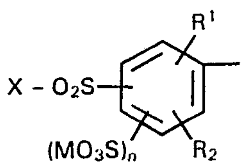

(3a)

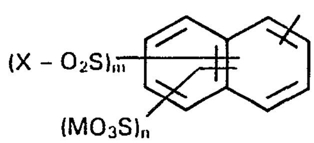

(3b)

dans lesquelles

$R^1$ et $R^2$ peuvent être, l'un par rapport à l'autre, identiques ou différents,

$R^1$ représentant un atome d'hydrogène, un méthyle, un éthyle, un méthoxy, un éthoxy, un carboxy de formule générale -COOM, un atome de chlore ou un atome de brome,

$R^2$ représentant un atome d'hydrogène, un méthyle, un éthyle, un méthoxy, un éthoxy ou un atome de chlore,

m représente le nombre 1 ou le nombre 2,

n représente le nombre 0 ou le nombre 1 (lorsque n est nul le radical en question est l'hydrogène), et

M et X ont les significations données à la revendication 1.

5. Composés disazoïques selon l'une quelconque des revendications 1 à 3, dans lesquels D représente un radical répondant à la formule générale 3a

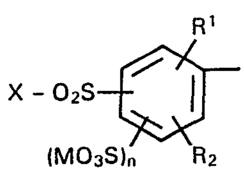

(3a)

dans laquelle

$R^1$ et $R^2$ représentent chacun, indépendamment l'un de l'autre, un atome d'hydrogène ou un radical méthoxy,

n représente le nombre 0 ou le nombre 1, et

M et X ont les significations données à la revendication 1.

6. Composés disazoïques selon l'une quelconque des revendications 1 à 3, caractérisés en ce que D représente un radical sulfo-1 (sulfato-2 éthylsulfonyl)-6 naphtyle-2 ou un radical sulfo-1 vinylsulfonyl-6 naphtyle-2.

7. Composés disazoïques selon l'une quelconque des revendications 1 à 3, dans lesquels D représente un radical (sulfato-2 éthylsulfonyl)-4 phényle ou un radical vinylsulfonyl-4 phényle.

8. Composés disazoïques selon l'une quelconque des revendications 1 à 3, dans lesquels D représente un radical sulfo-2 (sulfato-2 éthylsulfonyl)-4 phényle ou un radical sulfo-2 vinylsulfonyl-4 phényle.

9. Composés disazoïques selon l'une quelconque des revendications 1 à 3, caractérisés en ce que D représente un radical diméthoxy-2,5 (sulfato-2 éthylsulfonyl)-4 phényle ou un radical diméthoxy-2,5 vinylsulfonyl-4 phényle.

10. Composés disazoïques selon l'une quelconque des revendications 1 à 3, dans lesquels D représente un radical méthoxy-2 (sulfato-2 éthylsulfonyl)-5 phényle ou un radical méthoxy-2 vinylsulfonyl-5 phényle.

11. Composés disazoïques selon l'une quelconque des revendications 4 à 10, dans lesquels R représente un radical acétyle.

12. Composés disazoïques selon l'une quelconque des revendications 4 à 10, dans lesquels R représente un radical propionyle.

13. Composés disazoïques selon l'une quelconque des revendications 4 à 10, dans lesquels R représente un radical chloro-3 propionyle.

14. Procédé de préparation des composés disazoïques répondant à la formule générale 1 qui a été représentée et définie à la revendication 1, procédé caractérisé en ce qu'on couple un composé monoazoïque répondant à la formule générale 4:

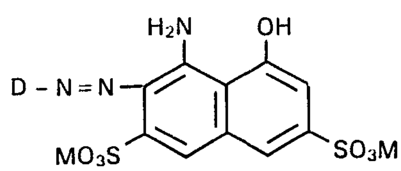

(4)

dans laquelle D et M ont les significations données à la revendication 1, avec le diazoïque d'une amine aromatique répondant à la formule générale 5:

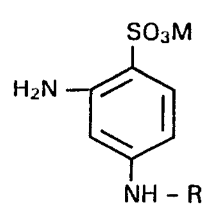

(5)

dans laquelle M et R ont les significations données à la revendication 1, ou on fait réagir, par un mode opératoire «en un seul pot», le diazoïque d'une amine aromatique de formule générale $D\text{-}NH_2$ (définie ci-dessus) et le diazoïque d'une amine aromatique de formule générale 5 (voir ci-dessus), en des quantités

équivalentes, avec l'acide amino-1 hydroxy-8 naphthalène-disulfonique-3,6, en mélange, d'abord à un pH compris entre 0 et 3, puis à un pH compris entre 3,5 et 8.

15. Application, comme colorants, des composés disazoïques selon la revendication 1 ou des composés disazoïques qui ont été préparés selon la revendication 14.

16. Application selon la revendication 15 pour la teinture ou l'impression de matières fibreuses contenant des radicaux hydroxy et/ou des radicaux carbamoyles.